# EUROPÄISCHE PATENTANMELDUNG

(11) **EP 4 702 830 A1**
(43) Veröffentlichungstag der Anmeldung: **04.03.2026**
(21) Anmeldenummer: 24197127.4
(22) Anmeldetag: 29.08.2024
(51) Int. Cl.: A01D 41/12, A01D 41/127

(54) **SENSORANORDNUNG ZUR ERFASSUNG VON KÖRNERN IN EINEM KÖRNER UND NICHTKORNBESTANDTEILE ENTHALTENDEN MATERIALSTROM IN EINEM MÄHDRESCHER**

(71) Anmelder: Deere & Company, Moline, IL 61265 (US)
(72) Erfinder: UNTERPAINTNER, MARTIN, 68163 Mannheim (DE); BROSCHART, MARCO, 68163 Mannheim (DE); RITTERSHOFER, MARTIN, 68163 Mannheim (DE)
(74) Vertreter: Holst, Sönke

(57) **Zusammenfassung**

Eine Sensoranordnung zur Erfassung von Körnern in einem Körner und Nichtkornbestandteile enthaltenden Materialstrom in einem Mähdrescher (10) umfasst:
eine Fördereinrichtung, die einen Einlass und einen Auslass (74) umfasst und in welcher der Materialstrom in eine rotierende Bewegung versetzbar ist;
einen elektrooptischen Sensor, der am äußeren Umfang der Fördereinrichtung angeordnet ist und auf den Materialstrom blickt, und
eine elektronische Verarbeitungseinrichtung zur Erkennung von Körnern im Materialstrom anhand des Signals des elektrooptischen Sensors,
wobei der elektrooptische Sensor am stromab liegenden Bereich der Fördereinrichtung angeordnet ist.

## Beschreibung

Die Erfindung betrifft eine Sensoranordnung zur Erfassung von Körnern in einem Körner und Nichtkornbestandteile enthaltenden Materialstrom in einem Mähdrescher.

### Stand der Technik

Mähdrescher dienen zur Ernte von Korn. Die oberirdischen Teile von Pflanzen, wie Sojabohnen, Mais, Weizen oder Hafer, werden abgeschnitten oder aufgesammelt oder abgestreift oder die Fruchtstände der Pflanzen, wie Mais oder Sonnenblumen, werden abgetrennt und einer Dresch- und Trenneinrichtung zugeführt, um die Früchte (das Korn) von den übrigen Bestandteilen des Ernteguts zu trennen. Nach dem Dresch- und Trennvorgang befinden sich noch Verunreinigungen im Korn, wie Strohteilchen und Spreu. Das beim Dreschen und Trennen gewonnene Gemisch aus Korn und Verunreinigungen wird daher einem Reinigungssystem zugeführt, das in der Regel ein Obersieb und ein Untersieb und optional ein Vorsieb umfasst.

Während das gereinigte Korn, nachdem es durch das Ober- und Untersieb hindurchgelaufen ist, durch einen Elevator in den Korntank gefördert und das am Ende des Untersiebs abgegebene Material (Überkehr) einem Nachdreschvorgang unterzogen wird, wird am Ende des Obersiebs verbleibendes Material auf das Feld abgegeben, sei es durch einen Spreuverteiler oder eine Häcksel- und Verteileinrichtung für das von der Trenneinrichtung abgebebene Nichtkornmaterial. Auch das nach dem Trennvorgang verbliebene, durch die Trenneinrichtung abgegebene Nichtkornmaterial wird üblicherweise auf das Feld abgegeben, in der Regel durch die Häcksel- und Verteileinrichtung, oder es wird in einem Schwad abgelegt.

In beiden auf das Feld abgegebenen Erntegutresteströmen, die vom Obersieb und von der Trenneinrichtung abgegeben werden, sind in im Allgemeinen noch Verlustkörner enthalten. Zur Optimierung der Einstellung von Betriebsparametern des Mähdreschers ist es sinnvoll, die Anzahl der auf das Feld abgegebenen Verlustkörner zu erfassen. Ein weiterer Einsatzort für Sensoren zur Erfassung eines Körnerstroms in einem Mähdrescher findet sich in der Überkehr (EP 1 516 522 A2).

Die Anzahl der Körner in einem Materialstrom wird in Mähdreschern üblicherweise durch Prallplattensensoren erfasst, die beim Aufprall von Körnern entstehende mechanische Schwingungen (s. beispielsweise DE 1 810 519 A) oder beim Aufprall von Körnern entstehende Änderungen von elektrischen Eigenschaften einer sensitiven Schicht erfassen (EP 2 977 735 A2).

Zur Erkennung von Verlustkörnern wurde weiterhin vorgeschlagen, den vom Mähdrescher abgegebenen Erntegutrestestrom an einer Kamera vorbeizuführen und die Verlustkörner anhand einer Bildverarbeitung zu erkennen. Die Kamera erfasst beispielsweise vom Obersieb abgegebenes Material, das im freien Flug an der Kamera vorbeiströmt und identifiziert darin enthaltene Verlustkörner (US 6 119 442 A, US 2021/0088691 A1) oder es wird eine Probe aus dem Materialstrom entnommen und mittels der Kamera untersucht (WO 2024/036401 A1), oder die Kamera ist an der stromauf liegenden Hälfte des äußeren Umfangs eines rotierenden Verteilers für die Erntegutreste angebracht (US 2022/0394925 A1).

### Aufgabe

Bei den Prallplattensensoren hat es sich als problematisch erwiesen, absolute Werte für die Körneranzahlen mit hinreichender Genauigkeit zu erfassen, da die abgegebenen Signale von einer Reihe von in der Regel unbekannten Parametern abhängen, wie dem Durchsatz und von Eigenschaften des Ernteguts, wie Feuchte, Dichte und Abmessungen der Körner. Daher sind diese Verlustsensoren von Zeit zu Zeit in zeitaufwändiger Weise zu kalibrieren, in der Regel durch Auszählen der auf das Feld ausgeworfenen Körner (s. EP 2 764 764 A1 und EP 2 742 791 A2), oder mittels einer separaten Anordnung zum Sammeln, Reinigen und Wiegen der vom Mähdrescher auf das Feld ausgeworfenen Erntegutreste (DE 40 09 981 A1).

Bei der Erfassung der Verlustkörner durch Kameras ist es ebenfalls nicht einfach, sie optisch von dem Nichtkornmaterial, in dem sie enthalten sind, zu unterscheiden. Das Nichtkornmaterial umfasst beispielsweise Strohpartikel, Spelzen, Grannen und hat in der Regel dieselbe Farbe und zum Teil auch ähnliche Formen wie die Körner. Das gilt insbesondere für Ausführungsformen, bei denen das Material im freien Flug erfasst wird (US 6 119 442 A, US 2021/0088691 A1) oder eine ruhende oder rotierende Probe untersucht wird (WO 2024/036401 A1, US 2022/0394925 A1, als gattungsbildend angesehen). Das Problem liegt darin, dass an den Stellen, an denen die Kamera angebracht ist, relativ viel anderes (Nicht-Korn-) Material vorbeiströmt und das Verlustkorn nur einen kleinen Anteil am Materialstrom ausmacht.

Die Aufgabe der vorliegenden Erfindung wird darin gesehen, eine demgegenüber verbesserte Sensoranordnung zur Erfassung von Körnern in einem Körner und Nichtkornbestandteile enthaltenden Materialstrom in einem Mähdrescher vorzuschlagen, welche die erwähnten Nachteile nicht oder nur in vermindertem Maße aufweist.

### Lösung

Die vorliegende Erfindung wird durch die Patentansprüche definiert.

Eine Sensoranordnung zur Erfassung von Körnern in einem Körner und Nichtkornbestandteile enthaltenden Materialstrom in einem Mähdrescher umfasst eine Fördereinrichtung, die einen Einlass und einen Auslass umfasst und in welcher der Materialstrom in eine rotierende Bewegung versetzbar ist; einen elektrooptischen Sensor, der am äußeren Umfang der Fördereinrichtung angeordnet ist und auf den Materialstrom blickt, und eine elektronische Verarbeitungseinrichtung zur Erkennung von Körnern im Materialstrom anhand des Signals des elektrooptischen Sensors, wobei der elektrooptische Sensor am stromab liegenden Bereich der Fördereinrichtung angeordnet ist.

Die Fördereinrichtung rotiert, was aufgrund der Fliehkraft eine trennende Wirkung von relativ schwerem Korn einerseits und relativ leichten, anderen Erntegutresten (Kaff, Strohteilchen) andererseits zur Folge hat, die umso weiter fortschreitet, je länger und weiter der Erntegutrestestrom sich in der rotierenden Bewegung befindet. Es wird vorgeschlagen, den Sensor in der Nachbarschaft des Auslasses der Fördereinrichtung anzubringen, denn dort ist die Trennung zwischen Korn (im Folgenden auch als Körner bezeichnet) und anderen Bestandteilen des Erntegutrestestroms hinreichend weit (und weiter als im Stand der Technik nach US 2022/0394925 A1) fortgeschritten, was eine optische Unterscheidung von Korn und anderen Bestandteilen des Erntegutrestestroms erleichtert. Auf diese Weise wird die Erkennung von (Verlust-) Körnern im Erntegutrestestrom verbessert.

Insbesondere wird der Materialstrom der Fördereinrichtung axial zugeführt und von der Fördereinrichtung am Auslass tangential abgegeben. Die Fördereinrichtung kann eine rotierende Scheibe mit daran angebrachten Mitnehmern umfassen, wobei sich um den Umfang der Scheibe eine Umhüllung erstreckt, in der ein Auslass offengelassen ist, wobei der elektrooptische Sensor durch eine Öffnung in der Umhüllung mit dem von der Scheibe geförderten Materialstrom zusammenwirkt.

Der elektrooptische Sensor kann an der stromab liegenden Hälfte, bevorzugt im stromab liegenden Drittel und noch bevorzugter im stromab liegenden Viertel der Umhüllung angeordnet sein.

Der elektrooptische Sensor ist insbesondere als Kamera ausgeführt, deren Bildsignal durch ein Bildverarbeitungssystem ausgewertet wird, um die Körner zu identifizieren. Hierbei kann auch an sich bekannte Software zurückgegriffen werden, die im Stand der Technik auch schon benutzt wird, um in einem Körnerelevator geförderte Körner und andere Partikel zu unterscheiden, s. beispielsweise DE 10 2011 082 908 A1. Es können jedoch auch beliebige andere elektrooptische Sensoren verwendet werden, wie nicht-bildgebende Sensoren (z.B. Nahinfrarotsensoren) oder bildgebende Sensoren, wie Laserscanner.

Die Fördereinrichtung ist insbesondere ein Erntegutresteverteiler, bei dem es sich insbesondere um einen stromab eines Reinigungssystems angeordneten Spreuverteiler oder ein stromab eines Strohhäckslers angeordnetes Wurfgebläse handeln kann. Es wäre auch denkbar, dass die Fördereinrichtung die Überkehr fördert, s. EP 2 719 271 A1 und der Sensor zur Erkennung von Körnern im Überkehrstrom dient.

### Ausführungsbeispiel

In den Zeichnungen ist ein nachfolgend näher beschriebenes Ausführungsbeispiel dargestellt. Es zeigt:
- Fig. 1: eine schematische seitliche Ansicht eines Mähdreschers,
- Fig. 2: eine perspektivische Ansicht eines Erntegutresteverteilers, und
- Fig. 3: eine schematische Draufsicht auf den Erntegutresteverteiler.

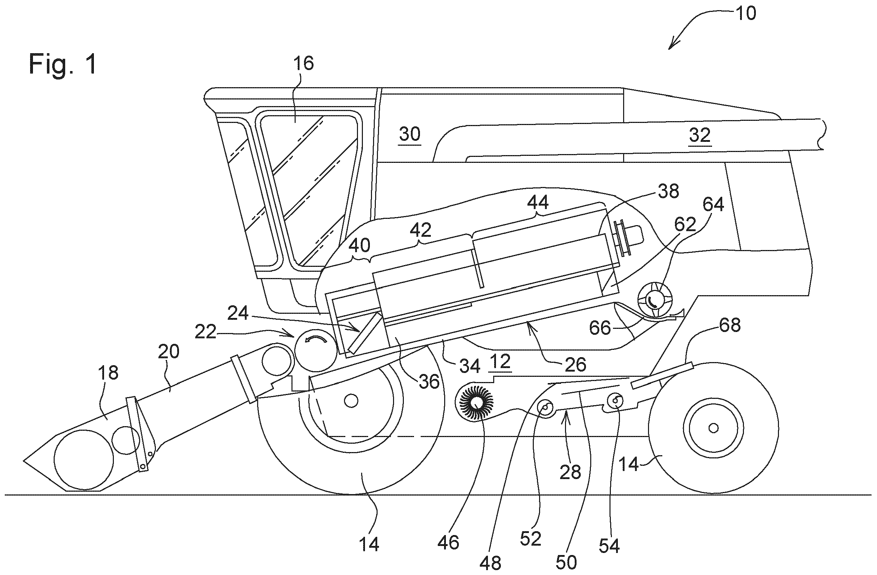

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen unmittelbar rückwärtig des rückwärtigen Endes des oberen Lamellensiebs 48 angeordneten, rotierenden Erntegutresteverteiler 68 auf dem Feld verteilt. Die Erntegutreste fallen von oben in den Erntegutresteverteiler 68, werden dort beschleunigt und durch seitliche Auslässe auf das Feld abgegeben.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Das Stroh kann in an sich bekannter Weise in einem Strohhäcksler zerkleinert und durch eine stromab des Strohhäckslers angebrachte Strohverteilerhaube mit darunter angeordneten Leitkufen oder angetriebenen Wurfgebläsen auf dem Feld verteilt werden (vgl. beispielsweise EP 2 250 868 A1).

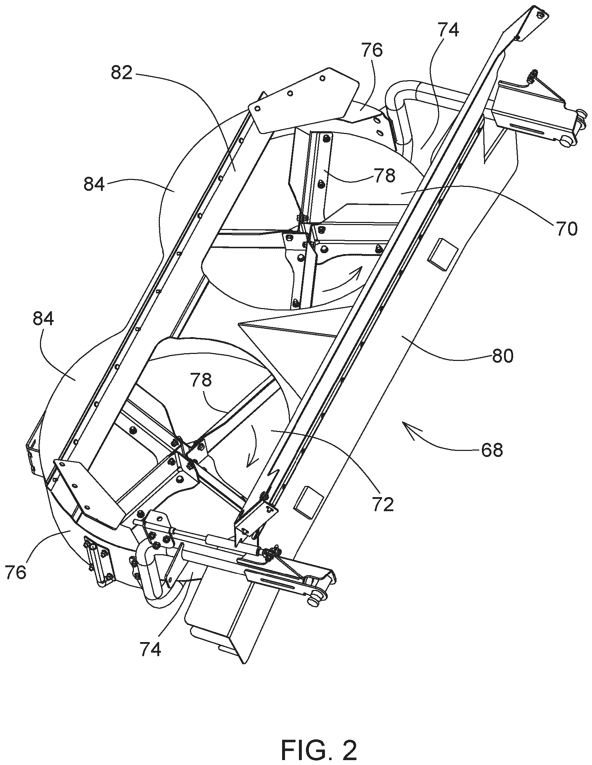

Die Figur 2 zeigt eine perspektivische Ansicht des Erntegutresteverteilers 68, der in der Literatur auch als Kaffstreuer oder Spreuverteiler bezeichnet wird. Der Erntegutresteverteiler 68 umfasst zwei um etwa vertikale Achsen rotierende, seitlich nebeneinander angeordnete Scheiben 70, 72 mit darauf befestigten Mitnehmern 78, die sich etwa radial zur mittigen Drehachse der Scheiben 70, 72 erstrecken. Die Schreiben 70, 72 werden über nicht gezeigte, mechanische oder hydraulische oder elektrische Antriebsstränge in Rotation versetzt und drehen sich im Betrieb in den durch die Pfeile angedeuteten Richtungen. Die linke Scheibe 72 dreht sich demnach, von oben betrachtet, im Uhrzeigersinn und die rechte Scheibe 70 im Gegenuhrzeigersinn. Die Scheiben 70, 72 sind in einem Gehäuse angeordnet, das einen hinteren Querträger 80, einen vorderen Querträger 82 und sich um den Umfang der Scheiben 70, 72 erstreckende Umhüllungen 76 umfasst, in denen seitliche Auslässe 74 offengelassen sind. Das Gehäuse umfasst zudem obere Abdeckungen 84, welche die Scheiben 70, 72 in ihren vor dem vorderen Querträger 82 liegenden Bereichen nach oben hin abdecken.

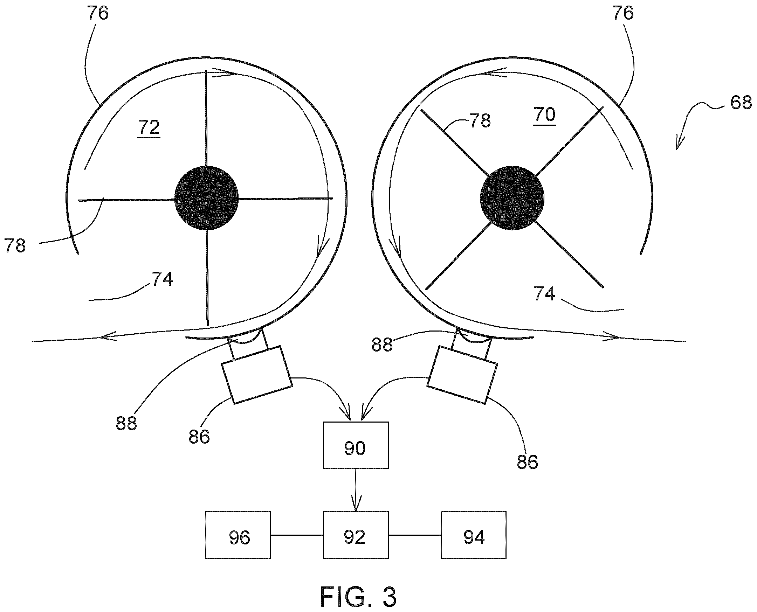

Die vom oberen Lamellensieb 48 abgegebenen Erntegutreste fallen von oben her, rückwärtig des vorderen Querträgers 82 in das Gehäuse des Erntegutresteverteilers 68 hinein und werden demnach den Scheiben 70, 72 axial (von oben her) zugeführt. Die rotierenden Scheiben 70, 72 beschleunigen die Erntegutreste und letztere verlassen den Erntegutresteverteiler 68 in tangentialer Richtung durch die seitlichen Auslässe 74, wie es auch in der Figur 3 erkennbar ist, die den Erntegutresteverteiler 68 in einer schematischen Draufsicht zeigt.

Am stromab liegenden Bereich der Umhüllungen 76 beider Scheiben 70, 72 sind Kameras 86 angeordnet, die durch Fensterscheiben 88, welche in passende Ausschnitte in den Umhüllungen 76 angeordnet sind, in den Innenraum der Erntegutresteverteiler 68 blicken. Die Kameras 86 erfassen demnach im Betrieb die Erntegutreste, die von den Scheiben 70, 72 gefördert werden. Die Kameras 86 übertragen ihre Bildsignale an eine oder mehrere Bildverarbeitungseinrichtung(en) 90, die mit Prozessoren ausgestattet sind, die eine Verarbeitung der Bildsignale der Kameras 86 durchführen, um im Erntegutrestestrom, der vom Erntegutresteverteiler gefördert und abgegeben wird, enthaltene Verlustkörner zu detektieren. Die Bildverarbeitungseinrichtung 90 ist ihrerseits mit einer Steuerung 92 verbunden, die wiederum mit einer Bedienerschnittstelle 94 verbunden ist. Auf der Bedienerschnittstelle 94 können die Verluste angezeigt werden. Zudem kann die Steuerung 92 mit Aktoren 96 verbunden sein, die basierend auf den ermittelten Verlusten Arbeitsparameter des Reinigungssystems 28 kontrolliert, insbesondere die Öffnungsgröße der Lamellensiebe 48 und/oder 50 und/oder die Drehzahl des Gebläses 46.

Die Kameras 86 sind, anders als im Stand der Technik (US 2022/0394925 A1), in den stromab liegenden Bereichen der Umhüllungen 76 der Scheiben 70, 72 angeordnet, d.h. unmittelbarer Nachbarschaft des Auslasses 74. Das hat den Vorteil, dass die Körner, die eine größere Massendichte als die anderen Erntegutreste (Strohteilchen und Kaff) aufweisen, aufgrund der Wirkung der Fliehkraft während der Drehung auf den Scheiben nach und nach in einem größeren Maße als die anderen Partikel der Erntegutreste nach außen gelangen und sich demnach sukzessive am äußeren Umfang der Scheiben 70, 72 und an den Umhüllungen 76 konzentrieren. Diese Konzentration steigt während der Drehung an und ist am Auslass 74 am größten. Durch die Drehung der Scheiben 70, 72 findet eine Separation zwischen schwereren Körnern und leichteren anderen Partikeln des Erntegutrestestroms statt, die man sich mit der vorliegenden Anordnung der Kameras 86 zu Nutze macht, denn die Erkennung der konzentrierten Körner in der Nähe des stromab liegenden Endes der Umhüllungen 76 ist wesentlich leichter möglich als weiter stromauf, wo die Körner weniger konzentriert sind. Die Kameras 86 sind insbesondere in der stromab liegenden Hälfte, bevorzugt im stromab liegenden Drittel und noch bevorzugter im stromab liegenden Viertel der Umhüllungen 76 angeordnet. Sie könnten auch dem stromab liegenden Ende der Umhüllungen 76, d.h. dem Auslass 74 unmittelbar benachbart, positioniert sein. Die Kameras 86 und die Bildverarbeitungseinrichtung 90 können anstelle von bisherigen Verlustsensoren (Prallplatten etc.) verwendet werden, die aufprallende Körner detektieren und zählen, oder zusätzlich dazu im Mähdrescher eingebaut sein und dazu dienen, die die aufprallende Körner detektierenden Verlustsensoren zu kalibrieren.

Es sei noch angemerkt, dass die in Figur 3 angezeigte Positionierung der Kameras 86 sinngemäß auch an Wurfgebläsen erfolgen könnte, die stromab eines Strohhäckslers angeordnet sind, wie sie beispielsweise in der EP 2 250 868 A1 und der US 2022/0394925 A1 gezeigt werden, deren Offenbarung durch Verweis mit in die vorliegenden Unterlagen aufgenommen wird. Die Kameras würden dann die Verlustkörner im Erntegutrestestrom erfassen, der dem Wurfgebläse von der Dresch- und Trenneinrichtung (Erntegutbearbeitungseinheit 26) und/oder von dem Reinigungssystem 28 zugeführt wird, abhängig von der jeweiligen (Häcksel- oder Schwadablage-) Betriebsart.

Die Signale der Kameras 86 können durch die Bildverarbeitungseinrichtung 90 nicht nur hinsichtlich der Verlustkörner ausgewertet werden, sondern es können auch andere Informationen aus den Bildern der Kameras 86 gewonnen werden, z.B. hinsichtlich des Bruchkornanteils. Diese Informationen hinsichtlich des Bruchkornanteils können dem Bediener angezeigt oder zur selbsttätigen Kontrolle von Arbeitsparametern der Erntegutbearbeitungseinrichtung 26 verwendet werden, z.B. zur Einstellung des Dreschspalts und Vorgabe der Drehzahl der Drescheinrichtung und/oder zur Steuerung der Vortriebsgeschwindigkeit.

## Patentansprüche

1. Sensoranordnung zur Erfassung von Körnern in einem Körner und Nichtkornbestandteile enthaltenden Materialstrom in einem Mähdrescher (10), umfassend:
eine Fördereinrichtung, die einen Einlass und einen Auslass (74) umfasst und in welcher der Materialstrom in eine rotierende Bewegung versetzbar ist;
einen elektrooptischen Sensor, der am äußeren Umfang der Fördereinrichtung angeordnet ist und auf den Materialstrom blickt, und
eine elektronische Verarbeitungseinrichtung zur Erkennung von Körnern im Materialstrom anhand des Signals des elektrooptischen Sensors,
**dadurch gekennzeichnet, dass** der elektrooptische Sensor am stromab liegenden Bereich der Fördereinrichtung angeordnet ist.

2. Sensoranordnung nach Anspruch 1, wobei der Materialstrom der Fördereinrichtung axial zugeführt und von der Fördereinrichtung am Auslass (74) tangential abgegeben wird.

3. Sensoranordnung nach Anspruch 2, wobei die Fördereinrichtung eine rotierende Scheibe (70, 72) mit daran angebrachten Mitnehmern (78) umfasst, wobei sich um den Umfang der Scheibe (70, 72) eine Umhüllung (76) erstreckt, in der ein Auslass (74) offengelassen ist, wobei der elektrooptische Sensor durch eine Öffnung in der Umhüllung (76) mit dem von der Scheibe (70, 72) geförderten Materialstrom zusammenwirkt.

4. Sensoranordnung nach Anspruch 3, wobei der elektrooptische Sensor an der stromab liegenden Hälfte, bevorzugt im stromab liegenden Drittel und noch bevorzugter im stromab liegenden Viertel der Umhüllung (76) angeordnet ist.

5. Sensoranordnung nach einem der vorhergehenden Ansprüche, wobei der elektrooptische Sensor eine Kamera (86) ist.

6. Sensoranordnung nach einem der vorhergehenden Ansprüche, wobei die Fördereinrichtung ein Erntegutresteverteiler (68) ist.

7. Sensoranordnung nach Anspruch 6, wobei der Erntegutresteverteiler (68) ein stromab eines Reinigungssystems (28) angeordneter Spreuverteiler oder ein stromab eines Strohhäckslers angeordnetes Wurfgebläse ist.

8. Mähdrescher mit einer Fördereinrichtung und einer Sensoranordnung nach einem der vorhergehenden Ansprüche.

## Geänderte Patentansprüche

### Geänderte Patentansprüche gemäss Regel 137(2) EPÜ.

1. Sensoranordnung zur Erfassung von Körnern in einem Körner und Nichtkornbestandteile enthaltenden Materialstrom in einem Mähdrescher (10), umfassend:
eine Fördereinrichtung, die einen Einlass und einen Auslass (74) umfasst und in welcher der Materialstrom in eine rotierende Bewegung versetzbar ist; wobei der Materialstrom der Fördereinrichtung axial zugeführt und von der Fördereinrichtung am Auslass (74) tangential abgegeben wird und die Fördereinrichtung eine rotierende Scheibe (70, 72) mit daran angebrachten Mitnehmern (78) umfasst und sich um den Umfang der Scheibe (70, 72) eine Umhüllung (76) erstreckt, in der ein Auslass (74) offengelassen ist,
einen elektrooptischen Sensor, der am äußeren Umfang der Fördereinrichtung angeordnet ist und auf den Materialstrom blickt, wobei der Sensor durch eine Öffnung in der Umhüllung (76) mit dem von der Scheibe (70, 72) geförderten Materialstrom zusammenwirkt, und
eine elektronische Verarbeitungseinrichtung zur Erkennung von Körnern im Materialstrom anhand des Signals des elektrooptischen Sensors,
**dadurch gekennzeichnet, dass** der elektrooptische Sensor im stromab liegenden Drittel der Umhüllung (76) angeordnet ist.

2. Sensoranordnung nach Anspruch 1, wobei der elektrooptische Sensor im stromab liegenden Viertel der Umhüllung (76) angeordnet ist.

3. Sensoranordnung nach Anspruch 2, wobei der elektrooptische Sensor am stromab liegenden Ende der Umhüllung (76), dem Auslass (74) direkt benachbart, angeordnet ist.

4. Sensoranordnung nach einem der Ansprüche 1 bis 3, wobei der elektrooptische Sensor eine Kamera (86) ist.

5. Sensoranordnung nach einem der vorhergehenden Ansprüche, wobei die Fördereinrichtung ein Erntegutresteverteiler (68) ist.

6. Mähdrescher mit einer Fördereinrichtung und einer Sensoranordnung nach einem der vorhergehenden Ansprüche.

7. Mähdrescher nach Anspruch 6, wenn rückbezogen auf Anspruch 5, wobei der Erntegutresteverteiler (68) ein stromab eines Reinigungssystems (28) angeordneter Spreuverteiler oder ein stromab eines Strohhäckslers angeordnetes Wurfgebläse ist.
